# EUROPÄISCHE PATENTSCHRIFT

(11) **EP 1 522 909 B1**
(45) Veröffentlichungstag und Bekanntmachung des Hinweises auf die Patenterteilung: **05.09.2007**
(21) Anmeldenummer: 04023128.4
(22) Anmeldetag: 29.09.2004
(51) Int. Cl.: G05B 19/042

(54) **Bedieneroberfläche für ein Regelgerät**
User interface for a control device
Interface utilisateur pour un dispositif de régulation

(30) Priorität: 09.10.2003 DE 10346873
(43) Veröffentlichungstag der Anmeldung: 13.04.2005
(73) Patentinhaber: ROBERT BOSCH GMBH, 70442 Stuttgart (DE)
(72) Erfinder: Jakob, Rainer, 35447 Reiskirchen (DE)

(56) Entgegenhaltungen:
- EP-A- 0 444 308
- EP-A- 1 376 280
- FR-A- 2 745 923
- US-A1- 2001 048 811
- US-A1- 2003 057 271
- US-B1- 6 381 502
- EBERTS R.: "Knowledge acquisition using neural networks for intelligent interface design" 'DECISION AIDING FOR COMPLEX SYSTEMS'. PROCEEDINGS OF THE INTERNATIONAL CONFERENCE ON SYSTEMS, MAN AND CYBERNETICS, CHARLOTTESVILLE, USA 13-16 OCT. 1991, NEW YORK, NY, USA, IEEE, Bd. 1, 13. Oktober 1991 (1991-10-13), Seiten 1331-1335, XP010054606 ISBN: 0-7803-0233-8
- SATO T. ET AL.: "Active understanding of human intention by a robot through monitoring of human behavior" 'ADVANCED ROBOTIC SYSTEMS AND THE REAL WORLD', IROS '94. PROCEEDINGS OF THE IEEE/RSJ/GI INTERNATIONAL CONFERENCE ON INTELLIGENT ROBOTS AND SYSTEMS, MUNICH, GERMANY 12-16 SEPT. 1994, NEW YORK, NY, USA, IEEE, 12. September 1994 (1994-09-12), Seiten 405-414, XP010141874 ISBN: 0-7803-1933-8

## Beschreibung

Die Erfindung betrifft eine Bedienoberfläche für ein Regelgerät nach dem Oberbegriff des Patentanspruches 1. Eine solche Bedienoberfläche ist z.B. aus der Druckschrift US 2001/0048811 A1 bekannt.
Derartige Bedienoberflächen kommen zur Regelung und Steuerung von Heizungsanlagen zum Einsatz. Sie sind mit einer Anzeige ausgestattet, mit der ein Auswahlmenü aufgerufen werden kann, das zu diversen Mess-, Betriebs- und/oder Auswahlwerten führt. Die Bedienung erfolgt in der Regel über zugeordnete Tasten und/oder Drehknöpfe. Dabei ist mindestens eine Taste zur Auswahl eines Menüpunktes oder eines Wertes sowie eine andere Taste oder ein Drehknopf zum Einstellen von Werten vorgesehen.
Gattungsgemäße Regelgeräte befinden sich nicht nur an den Heizgeräten selbst, denn üblicherweise sind an die Regelung einer Heizungsanlage Fembedienungsgeräte angeschlossen, welche den Nutzern eines Gebäudes die Bedienung der Heizungsanlage von einem Raum aus ermöglichen. Meistens sind Voreinstellungen bereits herstellerseitig erfolgt oder werden durch Fachpersonal vorgenommen. Trotzdem sind für die effektive Nutzung einer Heizungsanlage Eingaben erforderlich, die von unterschiedlichen Personen mit jeweils verschiedenen Gewohnheiten, teilweise auch von technischen Laien, vorgenommen werden.
Bekannt ist einerseits als Bedienphilosophie das Gedrückt-Halten einer Taste zur Auswahl einer speziellen Funktion, beispielsweise mit blinkender Anzeige als Auswahl-Bestätigung, bei gleichzeitigem Einstellen durch Drehen eines Drehkopfes oder Mehrfachdrücken einer anderen Taste. Anschließend wird die Auswahl-Taste wieder losgelassen und dabei der neu eingestellte Wert im Regelgerät gespeichert. Andererseits kennt man auch das Drücken einer Taste zur Auswahl einer speziellen Funktion. Mit dem Loslassen der Taste ist dann der entsprechende Wert veränderbar durch Drehen eines Drehkopfes oder Mehrfachdrücken einer anderen Taste. Anschließend muss aber die Auswahl-Taste oder eine andere Taste noch einmal zur Bestätigung gedrückt werden, um den eingestellten Wert zu speichern.
Somit wurde seither eine Bedienphilosophie mit dem Ausliefern eines technischen Gerätes immer fest vorgegeben, ohne spezielle regionale oder nutzerspezifische Marktanforderungen zu berücksichtigen. Daher konnte es möglicherweise zu Akzeptanz- oder Verständnisproblemen bei den Nutzem von Regelgeräten kommen, nur weil die Bedienphilosophie für vorzunehmende Einstellungen eventuell etwas ungewohnt war.

Der Erfindung liegt daher die Aufgabe zu Grunde, einfache, nutzerfreundliche Bedienoberfläche für ein Regelgerät, insbesondere zur Regelung und Steuerung einer Heizungsanlage zu schaffen.

Erfindungsgemäß wurde dies mit den Merkmalen des Patentanspruches 1 gelöst. Vorteilhafte Weiterbildungen sind den Unteransprüchen zu entnehmen.
Die Bedienoberfläche ist dadurch gekennzeichnet, dass die Benutzung der Bedienoberfläche erfasst und ausgewertet wird und dass daraus die am besten zu einem Benutzer passende Bedienungsart automatisch eingestellt wird. Wahlweise sind die nachfolgenden Bedienungsarten auswählbar und einstellbar:
a) Taste drücken, halten und gleichzeitiges Einstellen durch Drehen eines Drehkopfes oder Mehrfachdrücken einer anderen Taste oder
b) Taste drücken, loslassen, nachfolgendes Einstellen durch Drehen eines Drehkopfes oder Mehrfachdrücken einer anderen Taste und anschließendes Bestätigen
Zur Einstellung der am besten zu einem Benutzer passenden Bedienungsart für die Bedienoberfläche werden die Haltezeit und/oder die Betätigungsreihenfolge der Tasten und/oder des Drehknopfes ausgewertet. Weiterhin können die zeitlichen Abstände zwischen den einzelnen Betätigungsschritten an den Tasten oder am Drehknopf in die Auswertung einfließen.
Eine Bedienungsart für die Bedienoberfläche ist vorzugsweise herstellerseitig voreingestellt. Die Bedienungsart kann daher wahlweise einmalig eingestellt werden, indem die Benutzung der Bedienoberfläche nur bei der Installation erfasst und ausgewertet wird. Auch kann die Benutzung der Bedienoberfläche laufend erfasst und ausgewertet werden, so dass die Bedienungsart immer danach eingestellt wird und deshalb möglicherweise auch häufiger nutzerabhängig wechselt.

Mit der erfindungsgemäßen Bedienoberfläche für ein Regelgerät wird eine einfache, sichere und nutzerfreundliche Bedienung sichergestellt. Die Bedienphilosophie ist nicht mehr mit dem Ausliefern eines technischen Gerätes fest vorgegeben, so dass diesbezüglich auf regionale oder nutzerspezifische Marktanforderungen eingegangen werden kann. Akzeptanz- oder Verständnisprobleme bei den Nutzem von Regelgeräten werden ausgeschlossen, weil jeder genau die günstigste bzw. gewohnte Bedienphilosophie vorfindet. Dies geschieht für einen Nutzer entweder bewusst durch Einstellung, unbewusst durch Voreinstellung bei der Installation oder durch eine jederzeit flexible automatische Umschaltung nach Auswertung der tatsächlich durchgeführten Bedienungsschritte.

## Patentansprüche

1. Bedienoberfläche für ein Regelgerät, insbesondere zur Regelung und Steuerung einer Heizungsanlage, mit einer Anzeige für ein Auswahlmenü, Mess-, Betriebs- und/oder Auswahlwerte sowie zugeordneten Tasten und/oder Drehknöpfen, wobei mindestens eine Taste zur Auswahl eines Menüpunktes oder eines Wertes sowie eine andere Taste oder ein Drehknopf zum Einstellen von Werten vorgesehen ist,
**dadurch gekennzeichnet, dass** die Benutzung der Bedienoberfläche erfasst und ausgewertet wird und dass dann die am besten zu einem Benutzer passende Bedienungsart ausgewählt und eingestellt wird, indem entweder
a) Taste drücken, halten und gleichzeitiges Einstellen durch Drehen eines Drehkopfes oder Mehrfachdrücken einer anderen Taste oder
b) Taste drücken, loslassen, nachfolgendes Einstellen durch Drehen eines Drehkopfes oder Mehrfachdrücken einer anderen Taste und anschließendes Bestätigen
ausgewählt und eingestellt werden, wobei die Haltezeit der Tasten und/oder des Drehknopfes ausgewertet wird, wobei die Betätigungsreihenfolge der Tasten und/oder des Drehknopfes ausgewertet wird und/oder wobei die zeitlichen Abstände zwischen den einzelnen Betätigungsschritten an den Tasten oder am Drehknopf ausgewertet werden.

2. Bedienoberfläche nach Anspruch 1,
**dadurch gekennzeichnet, dass** eine Bedienungsart für die Bedienoberfläche voreingestellt ist und dass die Benutzung der Bedienoberfläche nur bei der Installation erfasst, ausgewertet und danach die Bedienungsart eingestellt wird.

3. Bedienoberfläche nach Anspruch 1,
**dadurch gekennzeichnet, dass** eine Bedienungsart für die Bedienoberfläche voreingestellt ist und dass die Benutzung der Bedienoberfläche laufend erfasst, ausgewertet und danach die Bedienungsart eingestellt wird.

## Claims

1. User interface for a controller, in particular for the regulation and control of a heating system, comprising a display for a selection menu, measurement, operating and/or selection values as well as allocated keys and/or rotary knobs, wherein at least one key is provided for selecting a menu point or a value and another key or a rotary knob is provided for setting values,
**characterised in that** the use of the user interface is detected and evaluated and that the operating mode best suited to a user is evaluated and set, whereby either
a) press button, hold and set at the same time by turning a rotary knob or multiply pressing another key or
b) press button, release, then set by turning a rotary knob of multiply pressing another button and then actuating
is selected and set, wherein the holding time of the keys and/or the rotary knob is evaluated, wherein the actuation sequences of the keys and/or the rotary knob is evaluated and/or wherein the time intervals between the individual actuation steps at the keys or at the rotary knob is evaluated.

2. The user interface according to claim 1, **characterised in that** an operating mode is preset for the user interface and that the use of the user interface is only detected during installation, evaluated and then the operating mode is set.

3. The user interface according to claim 1, **characterised in that** an operating mode is preset for the user interface and that the use of the user interface is only continuously detected, evaluated and then the operating mode is set.

## Revendications

1. Interface utilisateur pour un appareil de réglage, en particulier pour le réglage et la commande d'une installation de chauffage, avec un affichage pour un menu de sélection, des valeurs de mesure, des valeurs de service et/ou des valeurs de sélection ainsi que des touches et/ou boutons tournants attribués, sachant que au moins une touche est prévue pour la sélection d'une option ou d'une valeur ainsi qu'une autre touche ou un bouton tournant pour le réglage de valeurs,
**caractérisée en ce que** l'utilisation de l'interface utilisateur est saisie et analysée et **en ce que** le type de commande convenant le mieux pour un utilisateur est sélectionné et réglé en sélectionnant et en réglant l'une des deux possibilités suivantes
a) enfoncer la touche, la maintenir enfoncée, réglage simultané par rotation d'un bouton tournant ou enfoncer plusieurs fois une autre touche ou
b) enfoncer la touche, la relâcher, réglage consécutif par rotation d'un bouton tournant ou enfoncement répété d'une autre touche suivi d'une confirmation,
le temps de maintien des touches et/ou du bouton tournant étant analysé, l'ordre de succession d'actionnement des touches et/ou du bouton tournant étant analysé et/ou les espacements dans le temps entre les étapes d'actionnement individuelles étant analysés sur les touches ou sur le bouton tournant.

2. Interface utilisateur selon la revendication 1, **caractérisée en ce qu'**un type de commande est préréglé pour l'interface utilisateur et **en ce que** l'utilisation de l'interface utilisateur est saisie seulement lors de l'installation, analysée et le type de commande est réglé ensuite.

3. Interface utilisateur selon la revendication 1, **caractérisée en ce qu'**un type de commande est préréglé pour l'interface utilisateur et **en ce que** l'utilisation de l'interface utilisateur est saisie de façon continue, analysée et le type de commande est réglé ensuite.
